# EUROPEAN PATENT SPECIFICATION

(11) **EP 4 191 477 B1**
(45) Date of publication and mention of the grant of the patent: **29.07.2026**
(21) Application number: 21880405.2
(22) Date of filing: 07.10.2021
(51) Int. Cl.: G06N 3/0464, G06N 3/063

(54) **ELECTRONIC DEVICE AND CONTROL METHOD FOR ELECTRONIC DEVICE**
ELEKTRONISCHE VORRICHTUNG UND STEUERUNGSVERFAHREN FÜR ELEKTRONISCHE VORRICHTUNG
DISPOSITIF ÉLECTRONIQUE ET PROCÉDÉ DE COMMANDE POUR DISPOSITIF ÉLECTRONIQUE

(30) Priority: 15.10.2020 KR 20200133509; 14.01.2021 KR 20210005465
(43) Date of publication of application: 07.06.2023
(73) Proprietor: Samsung Electronics Co., Ltd., Suwon-si, Gyeonggi-do 16677 (KR)
(72) Inventor: PARK, Chulsoo, Suwon-si Gyeonggi-do 16677 (KR); KIM, Jongho, Suwon-si Gyeonggi-do 16677 (KR); CHO, Youngrae, Suwon-si Gyeonggi-do 16677 (KR); KWON, Kiseok, Suwon-si Gyeonggi-do 16677 (KR); LEE, Jonghun, Suwon-si Gyeonggi-do 16677 (KR)
(74) Representative: Gulde & Partner
(86) International application number: PCT/KR2021/013802
(87) International publication number: WO 2022/080758

(56) References cited:
- KR-A- 20170 128 080
- KR-A- 20200 072 666
- KR-A- 20200 091 623
- US-A1- 2019 347 537
- MOHAMMADREZA BAHARANI ET AL: "DeepDive: An Integrative Algorithm/Architecture Co-Design for Deep Separable Convolutional Neural Networks", ARXIV.ORG, CORNELL UNIVERSITY LIBRARY, 201 OLIN LIBRARY CORNELL UNIVERSITY ITHACA, NY 14853, 18 July 2020 (2020-07-18), XP081723486
- HAASE DANIEL; AMTHOR MANUEL: "Rethinking Depthwise Separable Convolutions: How Intra-Kernel Correlations Lead to Improved MobileNets", 2020 IEEE/CVF CONFERENCE ON COMPUTER VISION AND PATTERN RECOGNITION (CVPR), 13 June 2020 (2020-06-13), pages 14588 - 14597, XP033805317, DOI: 10.1109/CVPR42600.2020.01461

## Description

### [Technical Field]

The disclosure relates to an electronic device and a method for controlling the electronic device, and more particularly, to an electronic device capable of efficiently performing a convolution operation and a method for controlling the electronic device.

### [Background Art]

Recently, development of a neural network accelerator or deep learning chipsets for efficiently implementing and executing a function of artificial intelligence has been accelerated according to the development of an Artificial Intelligence (AI) field.

In the case of a neural network accelerator for performing a convolution operation process, there is a need for a technology for a single neural network accelerator to efficiently process both a 3D convolution operation and a depthwise convolution operation. In similar regards, publication MOHAMMADREZA BAHARANI ET AL: "DeepDive: An Integrative Algorithm/Architecture Co-Design for Deep Separable Convolutional Neural Networks", ARXIV.ORG, CORNELL UNIVERSITY LIBRARY, 201 OLIN LIBRARY CORNELL UNIVERSITY ITHACA, NY 14853, 18 July 2020, relates to an integrative framework designed for the implementation of Deep Separable Convolutional Neural Networks (DSCNNs) on edge FPGAs

However, in the case of a neural network accelerator having a hardware structure for parallel processing in an input channel direction according to the related art, when performing a 3D convolution operation, an operation may be performed by using all operators, whereas when a depthwise convolution operation is performed, even though a relatively small amount of operation amount is required compared to a case of performing a 3D convolution operation, there is a problem in that an operator may not be efficiently utilized.

### [Disclosure]

### [Technical Problem]

An aspect of the disclosure is to provide an electronic device capable of efficiently performing a convolution operation by using a parallel hardware structure of a neural network accelerator, and a method for controlling the electronic device.

### [Technical Solution]

An electronic device is provided, corresponding to the appended claims.

Methods of controlling an electronic device are provided, corresponding to the appended claims.

A non-transitory computer readable recording medium comprising a program for executing a control method of an electronic device is provided, corresponding to the appended claims.

### [Description of Drawings]

The above and other aspects, features, and advantages of certain embodiments of the present disclosure will be more apparent from the following description taken in conjunction with the accompanying drawings, in which:
FIG. 1 illustrates a configuration of an electronic device according to an embodiment of the disclosure;
FIG. 2 illustrates a plurality of modules and input and output data for a plurality of modules according to an embodiment of the disclosure;
FIGS. 3 to 4B illustrate a part of a depthwise convolution operation process according to an embodiment of the disclosure;
FIG. 5 illustrates a plurality of modules to perform a two-dimensional convolution operation according to the disclosure;
FIGS. 6 to 8 illustrate a part of a two-dimensional convolution operation according to various embodiments of the disclosure;
FIG. 9 illustrates a plurality of modules to perform a three-dimensional (3D) convolution operation according to an embodiment of the disclosure;
FIGS. 10 and 11 illustrate a part of a 3D convolution operation according to various embodiments of the disclosure; and
FIG. 12 illustrates a method of controlling an electronic device according to an embodiment of the disclosure.

### [Mode for Invention]

The disclosure may have various modifications and includes various embodiments, some of which are illustrated in the drawings and described in detail in the detailed description, without departing from the scope of the appended claims. However, this disclosure is not intended to limit the embodiments described herein but includes various modifications, equivalents, and / or alternatives, within the scope of the appended claims. In the context of the description of the drawings, like reference numerals may be used for similar components.

In describing the disclosure, well-known functions or constructions are not described in detail since they would obscure the disclosure with unnecessary detail, without departing from the scope of the appended claims.

The terms used in this disclosure are used merely to describe a particular embodiment, and are not intended to limit the scope of the claims. The expression of a singular includes a plurality of representations, unless the context clearly indicates otherwise.

The terms "have", "may have", "include", and "may include" used in the example embodiments of the disclosure indicate the presence of corresponding features (for example, elements such as numerical values, functions, operations, or parts), and do not preclude the presence of additional features.

In the description, the term "A or B", "at least one of A or/and B", or "one or more of A or/and B" may include all possible combinations of the items that are enumerated together. For example, the term "at least one of A or/and B" includes (1) including at least one A, (2) including at least one B, or (3) including both at least one A and at least one B.

In addition, expressions "first", "second", or the like, used in the disclosure may indicate various components regardless of a sequence and/or importance of the components, may be used to distinguish one component from the other components, and do not limit the corresponding components.

When any component (for example, a first component) is (operatively or communicatively) coupled with/to or is connected to another component (for example, a second component), it is to be understood that any component may be directly coupled with/to another component or may be coupled with/to another component through the other component (for example, a third component).

On the other hand, when any component (for example, a first component) is "directly coupled with/to" or "directly connected to" to another component (for example, a second component), it is to be understood that the other component (for example, a third component) is not present between the directly coupled components.

The expression "configured to" used in the disclosure may be interchangeably used with other expressions such as "suitable for," "having the capacity to," "designed to," "adapted to," "made to," and "capable of," depending on cases. The term "configured to" does not necessarily refer to a device being "specifically designed to" in terms of hardware.

Instead, under some circumstances, the expression "a device configured to" may refer, for example, to the device being "capable of" performing an operation together with another device or component. For example, the phrase "a processor configured to perform A, B, and C" may refer, for example, to a dedicated processor (e.g., an embedded processor) for performing the corresponding operations, or a generic-purpose processor (e.g., a central processing unit (CPU) or an application processor) that can perform the corresponding operations by executing one or more software programs stored in a memory device.

The term such as "module," "unit," "part", and so on may refer, for example, to an element that performs at least one function or operation, and such element may be implemented as hardware or software, or a combination of hardware and software. Further, except for when each of a plurality of "modules", "units", "parts", and the like needs to be realized in an individual hardware, the components may be integrated in at least one module or chip and be realized in at least one processor.

It is understood that various elements and regions in the figures may be shown out of scale. Accordingly, the disclosure is not limited by the relative sizes or spacing drawn from the accompanying drawings.

Hereinafter, an embodiment according to the disclosure will be described in detail with reference to the accompanying drawings so as to be easily carried out by a person skilled in the art to which the disclosure belongs.

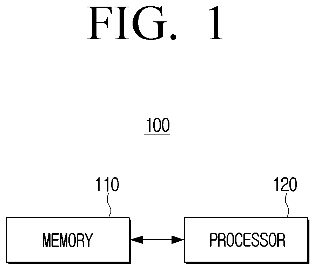

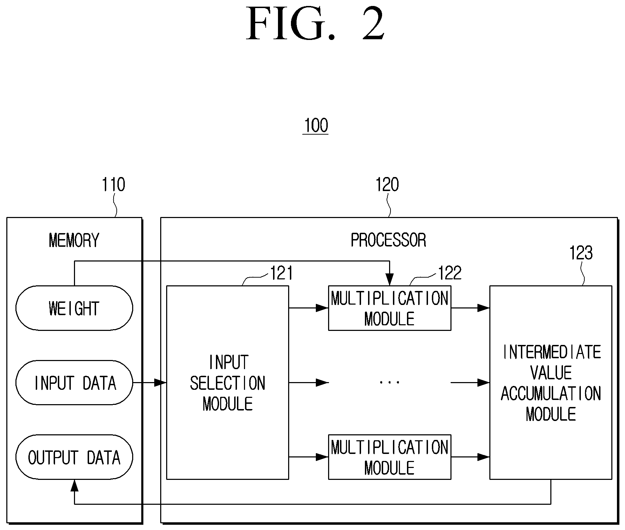

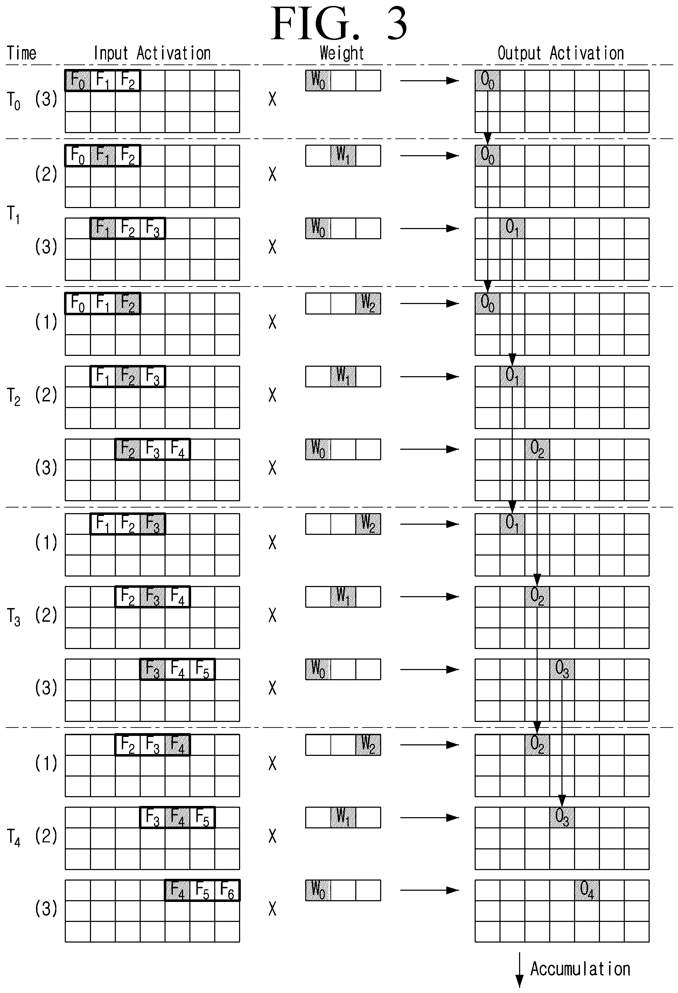

FIG. 1 is a block diagram illustrating a configuration of an electronic device according to an embodiment of the disclosure; FIG. 2 is a block diagram illustrating a plurality of modules and input and output data for a plurality of modules according to an embodiment of the disclosure; and FIGS. 3 to 4B are diagrams illustrating a part of a depthwise convolution operation process according to an embodiment of the disclosure. Key terms will be described first to describe the disclosure and an embodiment of the disclosure will be described below with reference to FIGS. 1 to 4B.

An electronic device 100 is a device to perform a convolution operation. To be specific, the electronic device 100 may obtain output data by performing the convolution operation based on input values included in input data and weights by kernels.

"Input data" are three-dimensional data including input values distinguished according to a plurality of channels. Specifically, the input data may be a three-dimensional matrix including a plurality of input values divided according to a row, a column, and a depth, and may be divided into a plurality of channels corresponding to each depth. The term "input data" may be replaced with the term "input feature map" or the like, and the term "input value" may be replaced with the term "input activation value."

The "kernel" may be a matrix including a plurality of weights for performing a multiplication operation with input values. Specifically, a kernel may be constructed in the form of a matrix of one-dimensional matrix, two-dimensional matrix, or three-dimensional matrix according to the type of convolution operation to be performed. The size of the kernel may be determined according to the horizontal length (i.e., the number of columns), the vertical length (i.e., the number of rows), the depth (i.e., the depth) of the kernel, and the plurality of weights included in the kernel may be divided according to a plurality of channels corresponding to the depth of the kernel. The term "kernel" may be replaced with terms such as a filter or a mask.

The "convolution operation" refers to an operation of multiplying input values included in input data and weights included in a kernel, respectively, and then summing each of the multiplication results. In particular, the convolution operation may include a three-dimensional (3D) convolution operation and a depthwise convolution operation. The 3D convolution operation refers to a convolution operation of obtaining 3D output data by using 3D input data and a 3D kernel, and the depthwise convolution operation refers to a convolution operation of obtaining 3D output data by using 3D input data and a two-dimensional kernel, or an one-dimensional kennel according to aspects not covered by the claims. A detailed calculation process based on each type of the convolution operation will be described below together with the description of an embodiment according to the disclosure. The convolution operation may be performed through a neural network model such as a Convolutional Neural Network (CNN). However, the type of a neural network model to which the disclosure may be applied is not limited thereto.

The "output data" may be a 3D matrix including a plurality of output values divided according to rows, columns, and depths, and may be divided into a plurality of channels corresponding to respective depths. The row, column, and depth of the output data do not correspond to the row, column, and depth of the input data, and the row, column, and depth of the output data may vary depending on the size, stride, padding, etc. of the kernel used for the convolution operation. The term "output data" may be replaced with terms such as an "output feature map", and the term "output value" may be replaced with the term "output activation value".

As shown in FIG. 1, an electronic device 100 according to the disclosure includes a memory 110 and a processor 120. However, the configurations as shown in FIG. 1 are merely illustrative, and a new configuration may be added or some configurations may be omitted in addition to the features illustrated in FIG. 1.

At least one instruction regarding the electronic device 100 may be stored in the memory 110. In addition, an operating system (OS) for driving the electronic device 100 may be stored in the memory 110. The memory 110 may store various software programs or applications for operating the electronic device 100 according to various embodiments. The memory 110 may include a semiconductor memory such as a flash memory, a magnetic storage medium (such as a hard disk), or the like.

Specifically, the memory 110 may store various software modules for operating the electronic device 100, and the processor 120 may control the operation of the electronic device 100 by executing various software modules that are stored in the memory 110. That is, the memory 110 may be accessed by the processor 120, and may perform reading, recording, modifying, deleting, updating, or the like, of data by the processor 120.

The memory 110 may include a non-volatile memory 110A capable of maintaining stored information even when power supply is interrupted, and a volatile memory 110B requiring continuous power supply to maintain the stored information. For example, the non-volatile memory 110A may be implemented with at least one of One Time Programmable ROM (OTPROM), Programmable ROM (PROM), Erasable and Programmable ROM (EPROM), Electrically Erasable and Programmable ROM (EEPROM), mask ROM, or flash ROM, and the volatile memory 110B may be implemented with at least one of Dynamic RAM (DRAM), Static RAM (SRAM), or Synchronous Dynamic RAM (SDRAM). In this disclosure, a term memory may be used to include the memory 110, the ROM, RAM in the processor 120, or a memory card (e.g., a micro Secure Digital (SD) card, memory stick) mounted to the electronic device 100.

In various embodiments according to the disclosure, the memory 110 may store input data, output data, information on a weight, and the like according to the disclosure. Although information on a weight may be simply stored in FIG. 2, the information on the weight are stored in the memory 110 in the form of first kernel information and second kernel information.

The "first kernel information" refers to information on a kernel including a weight for each of a plurality of channels. For example, the first kernel information may be information on a kernel including a weight of a 3 * 3 (horizontal * vertical) matrix for each of a plurality of channels. The "second kernel information" refers to information on a kernel converted so that weights for each of a plurality of channels of the first kernel information are arranged in the direction of the plurality of channels. For example, the second kernel information may be information on a kernel generated by converting weights configured in the form of a 3 * 1 (horizontal * vertical) matrix for each of a plurality of channels into a multi-channel form of 1 * 1 * 3 (horizontal * vertical * depth).

In other words, the first kernel information is a term for referring to information on a kernel of a typical form used for a convolution operation, that is, information on a kernel composed of a matrix for each of a plurality of channels. The second kernel information is a term for referring to information on a kernel generated by converting information on a kernel composed of a matrix for each of a plurality of channels into a kernel in a multi-channel form in order to perform a depthwise convolution operation in parallel among convolution operations according to the disclosure.

Various information required within a range for achieving the purpose of the disclosure may be stored in the memory 110, and the information stored in the memory 110 may be received from an external device or updated through input by a user.

The processor 120 controls overall operations of the electronic device 100. Specifically, the processor 120 is connected to a configuration of the electronic device 100 including the memory 110 as described above, and controls overall operations of the electronic device 100 by executing at least one instruction stored in the memory 110 as described above.

The processor 120 may be implemented in various ways. For example, the processor 120 may be implemented as at least one of an Application Specific Integrated Circuit (ASIC), an embedded processor, a microprocessor, a hardware control logic, a hardware Finite State Machine (FSM), a Digital Signal Processor (DSP), or the like. Further, processor 120 may include at least one of a Central Processing Unit (CPU), a Graphic Processing Unit (GPU), a Main Processing Unit (MPU), or the like.

The processor 120 may load data required for performing various operations from the non-volatile memory 110A to the volatile memory 110B. The loading refers to an operation of loading and storing data stored in the non-volatile memory 110A in the volatile memory 110B so that the processor 120 may access. The volatile memory 110B may be implemented as a component included in the processor 120 as one component of the processor 120, but this is merely an embodiment, and may be implemented as a separate component from the processor 120.

In particular, one or more processors 120 according to the disclosure may be implemented. The processor 120 may include a neural network accelerator for efficiently controlling an operation process of a convolutional neural network model, and a central processing unit (CPU) for controlling operations of various configurations including a neural network accelerator. In addition, the neural network accelerator may include a plurality of Micro Processor Units (MPUs) and the like, and the plurality of MPUs may include a plurality of modules for implementing one or more embodiments according to the disclosure.

As shown in FIG. 2, the plurality of modules may include an input selection module 121, a plurality of multiplication modules 122, an intermediate value accumulation module 123, and the like. The plurality of modules according to the disclosure may be implemented as a hardware module included in the processor 120.

"The input selection module 121" refers to a module for transmitting input values to a plurality of multiplication modules 122 in different manners according to the type of convolution operation. When an input value included in the input data is received, the input selection module 121 transmits the input values to the plurality of multiplication modules 122 based on the type of the convolution operation.

"The plurality of multiplication modules 122" refers to a module for performing a multiplication operation between an input value and a weight. Specifically, when an input value is received from the input selection module 121 and a weight is received by the processor 120, the plurality of multiplication modules 122 may multiply the received input value and the weight to transmit an intermediate value, which is a result value of the multiplication, to the intermediate value accumulation module 123.

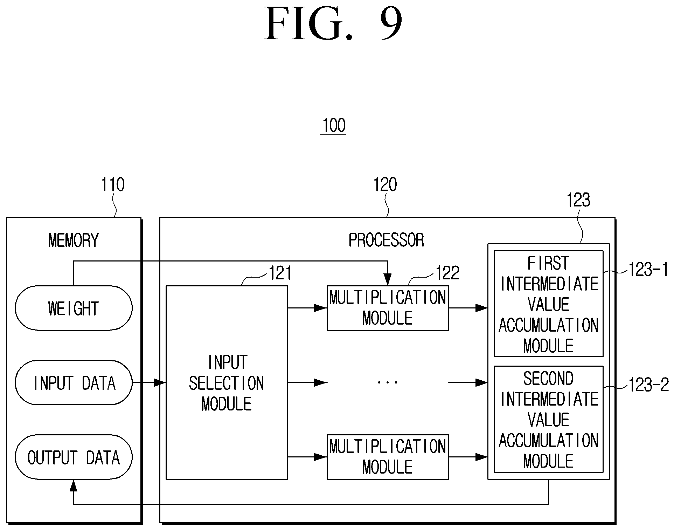

The "intermediate value accumulation module 123" refers to a module for obtaining an output value by summing intermediate values obtained in a convolution operation process. Specifically, when a plurality of intermediate values are received from the plurality of multiplication modules 122, the intermediate value accumulation module 123 obtains and output an output value based on a plurality of intermediate values. The intermediate value accumulation module 123 includes a first intermediate value accumulation module 123-1 (e.g., as shown in FIG. 9) used in a depthwise convolution process and may include a second intermediate value accumulation module 123-2 (e.g., as shown in FIG. 9) used in a 3D convolution process.

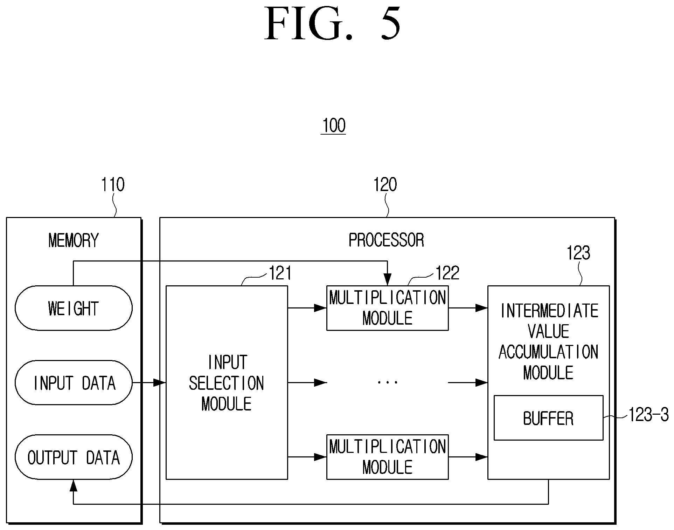

Here, a depthwise procedure using the first intermediate value accumulation module 123-1 will be first described, and a 3D convolution process using the second intermediate value accumulation module 123-2 will be described with reference to FIGS. 9 to 11. The intermediate value accumulation module 123 may include at least one register and at least one buffer. An embodiment related to the buffer is described above with reference to FIGS. 5 to 8.

The processor 120 may identify the type of a convolution operation to be performed, and control the plurality of modules in a different manner according to whether the convolution operation to be performed is a 3D convolution operation or a depthwise convolution operation. In one embodiment, the processor 120 may use first kernel information when performing a 3D convolution operation and use second kernel information when performing a depthwise convolution operation. Hereinafter, an embodiment related to a depthwise convolution operation will be described with reference to FIGS. 3 to 4B.

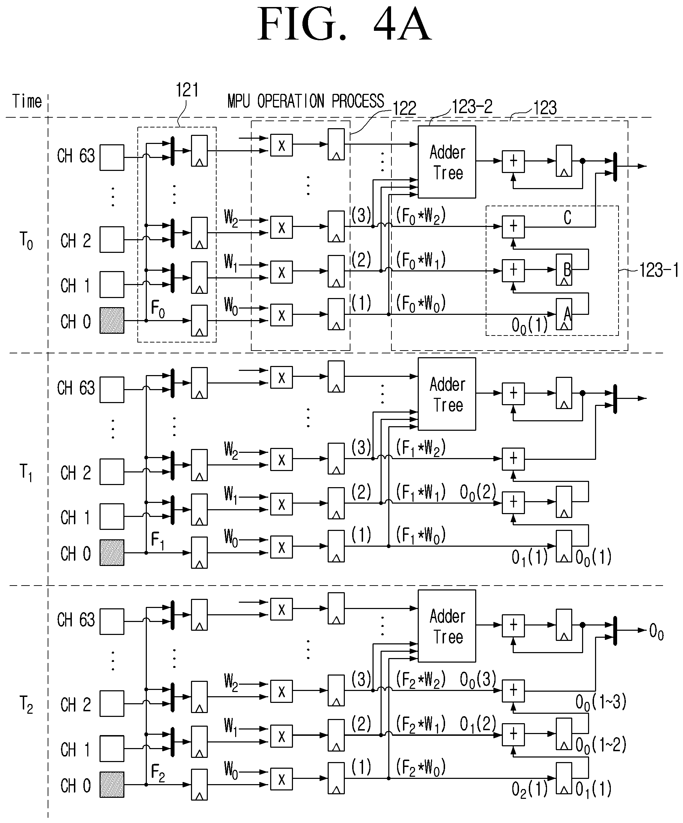

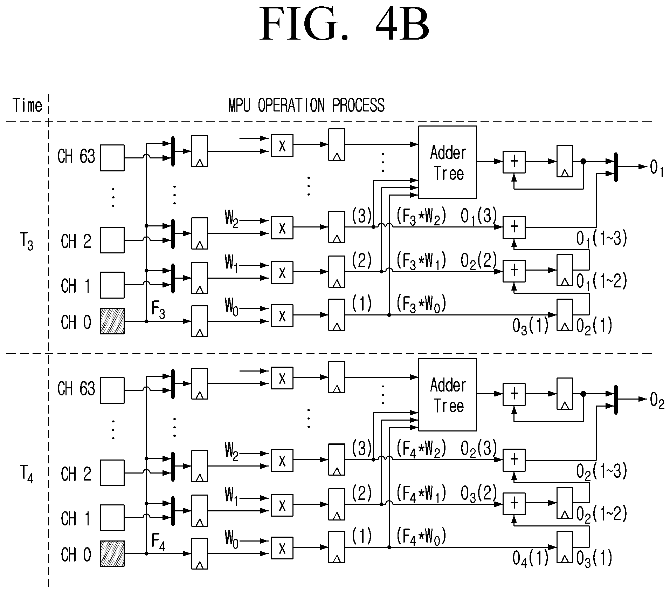

Specifically, FIG. 3 is a diagram illustrating a process of obtaining an output value based on an input value and a weight at a time point of T₀ to T₄ when performing a one-dimensional convolution operation among depthwise convolution operations, and FIGS. 4A and 4B are diagrams illustrating an operation of a circuit including a plurality of modules according to the disclosure when performing the operation as shown in FIG. 3. In particular, a case in which a plurality of weights corresponding to a first channel are three is described as an example in the description of FIGS. 3 to 4B.

The processor 120 inputs, to a plurality of MPUs for each preset cycle, input values having the same row and column and different depths among input values included in the input data. However, in the case of a depthwise convolution operation, unlike a 3D convolution operation as described below, a process of adding intermediate values for input values of different channels in order to obtain one output value is not necessary. Accordingly, in describing an embodiment of a depthwise convolution operation, an operation process for input values corresponding to a first channel among a plurality of channels will be mainly described.

When the depth convolution operation is performed, the processor 120 controls the input selection module 121 such that a plurality of input values corresponding to a first channel among the plurality of channels are input to all of two or more multiplication modules 122 among the plurality of multiplication modules 122. In particular, the number of two or more multiplication modules 122 corresponds to the number of the plurality of weights included in the kernel. In the following description of the disclosure, the term "two or more multiplication modules 122" is used for specifying multiplication modules 122 used in a depthwise convolution operation according to the disclosure among a plurality of multiplication modules 122.

In other words, the processor 120 controls the input selection module 121 such that the input value is input to all of the multiplication modules 122 as many as the number of the plurality of weights included in the kernel whenever each of a plurality of inputs corresponding to the first channel is input to the input selection module 121. In contrast, in the related art, the input values corresponding to the first channel are input to the multiplication module 122 corresponding to the first channel in the depthwise convolution operation.

For example, as the operation process of time T₂ at FIGS. 3 and 4A, if F₂ among a plurality of input values corresponding to the first channel is input to the input selection module 121, the processor 120 controls the input selection module 121 so that F₂ is input not only to the multiplication module 122 corresponding to the first channel but also the multiplication module 122 corresponding to each of a second channel and a third channel adjacent to the first channel.

The processor 120 inputs a plurality of weights corresponding to the first channel, one by one, to two or more multiplication modules 122 based on the second kernel information.

In other words, the processor 120 according to the disclosure inputs a plurality of weights corresponding to the first channel, one by one, to two or more multiplication modules 122 based on the second kernel information converted into the kernel in the form of a multi-channel. In contrast, in the related art, a plurality of weights corresponding to the first channel is input to only the multiplication module 122 corresponding to the first channel in a depthwise convolution operation.

For example, as in an operation process at time T₂ in FIGS. 3 and 4A, the processor 120 may input each of W₀, W₁, and W₂ (which are a plurality of weights corresponding to the first channel), one by one, to each of three multiplication modules 122 corresponding to each of the first channel, the second channel, and the third channel. The processor 120 may input the weight W₀ to the multiplication module 122 corresponding to the first channel, input the weight W₁ to the multiplication module 122 corresponding to the second channel, and input the weight W₂ to the multiplication module 122 corresponding to the third channel.

A plurality of weights (W₀, W₁, and W₂) are constructed in the form of a multi-channel form of 1 * 1 * 3 (horizontal * vertical * depth) and stored in the memory 110 as second kernel information.

As described above, when the plurality of input values and the plurality of weights are input to the plurality of multiplication modules 122, the processor 120 performs a multiplication operation with each of the plurality of weights for each of the plurality of input values through the plurality of multiplication modules 122 to obtain a plurality of intermediate values based on each multiplication operation result.

For example, as in the operation process at time T₂ of FIGS. 3 and 4A, all three multiplication modules 122 corresponding to the first channel, the second channel, and the third channel have an input value F₂ and when weights W₀, W₁, and W₂ are input to each of the three multiplication modules 122, the multiplication module 122 corresponding to the first channel performs a multiplication operation between F₂ and W₀ to obtain an intermediate value of F₂*W₀, and the multiplication module 122 corresponding to the second channel performs a multiplication operation between F₂ and W₁ to obtain an intermediate value of F₂*W₁, and the multiplication module 122 corresponding to the third channel performs a multiplication operation between F₂ and W₂ and obtain the intermediate value of F₂*W₂.

Referring to FIG. 4B together with FIG. 3, like the operation process at time T₂, the three multiplication modules 122 corresponding to each of the first channel, the second channel, and the third channel may obtain a plurality of intermediate values according to the operation result of each of F₃*W₀, F₃*W₁, and F₃*W₂ at T₂ followed by T₃, and may obtain a plurality of intermediate values according to the respective operation results of F₄*W₀, F₄*W₁, and F₄*W₂ at T₄ following time T₃.

As described above, when a plurality of intermediate values are obtained, the processor 120 sums intermediate values corresponding to each location of a kernel among the plurality of intermediate values through the intermediate value accumulation module 123 to obtain a plurality of output values according to each sum result. Specifically, the processor 120 may obtain a plurality of output values according to a sum of intermediate values by using a first intermediate value accumulation module 123-1 among the intermediate value accumulation modules 123. The "intermediate values respectively corresponding to the positions of the kernels" refer to intermediate values obtained according to a multiplication result by multiplying a plurality of weights included in a kernel and a plurality of input values corresponding thereto while sequentially moving a kernel according to a predetermined interval (i.e., stride) on a matrix of input data.

For example, when the operation process of T₃ and T₄ is sequentially performed in FIGS. 3 and 4A after the operation process is performed at the time T₂ of FIGS. 3 and 4A as described above, the processor 120 may obtain an output value O₂ by summing F₂ * W₀, F₃ * W₁, and F₄ * W₂, which are intermediate values, when the location of the kernel corresponds to the input values F₂, F₃, and F₄ through the first intermediate value accumulation module 123-1.

An output value O₂ is obtained by summing an intermediate value F₂ * W₀ obtained at a time T₂, an intermediate value F₃ * W₁ obtained at a time T₃, and an intermediate value F₄ * W₂ obtained at a time T4, but the value may be obtained by a similar method in the case of an output value O₀ and an O₁. If an intermediate value F₀ * W₀ is obtained at a time T₀ through a plurality of multiplication modules 122, and if an intermediate value F₁ * W₀ and F₁ * W₁ are obtained at a time T₁, an intermediate value F₀ * W₀, F₁ * W₁, and F₂ * W₂ may be summed at a time T₂ to obtain an output value O₀ addition, and an intermediate value F₁ * W₀, F₂ * W₁, and F₃ * W₂ may be summed at time T₃ to obtain an output value O₁.

The intermediate values obtained through the plurality of multiplication modules 122 may be temporarily stored in a register included in the intermediate value accumulation module 123, and the intermediate values stored in the register may be used to obtain a final output value. Each of "A" and "B" of FIG. 4A shows a register for storing an intermediate value obtained through a multiplication module 122 corresponding to a first channel and a multiplication module 122 corresponding to a second channel. "C" of FIG. 4A shows an output value according to a result of adding an intermediate value stored in register A and an intermediate value stored in register B to an intermediate value obtained through a multiplication module 122 corresponding to a third channel.

In the configuration included in the first intermediate value accumulation module 123-1, the registers included in the accumulation module may be referred to as a so-called Partial Sum Register (PSR), and among the configurations included in the first intermediate value accumulation module 123-1, the configuration illustrated as "+" symbol may be referred to as a so-called Partial Sum Adder (PSA) as a summer included in the intermediate value module.

The processor 120 may obtain an intermediate value F₀*W₁ and F₀*W₂ as well as the intermediate value F₀*W₀ at time T₀. The processor 120 may also obtain intermediate value F₁*W₂ as well as the intermediate value F₁*W₀ and F₁*W₁ But, the intermediate values F₀*W₁, F₀*W₂ and F₁*W₂ do not correspond to intermediate values corresponding to the location of the kernel and do not need to be obtained.

The above description has been made on the basis of a calculation process for input values corresponding to a first channel among a plurality of channels for convenience of description as described above, but an operation process according to an embodiment as described above may also be applied to other channels other than the first channel among the entire plurality of channels. Accordingly, the electronic device 100 may obtain output data including output values for the entire input data.

The first kernel information used for the 3D convolution operation and the second kernel information used for the depthwise convolution operation are respectively pre-constructed and stored in the memory 110, according to an embodiment. In a state, not covered by the claimed invention , where only the first kernel information is stored in the memory 110, the processor 120 may convert weights for each of a plurality of channels of the first kernel information in a direction of a plurality of channels, input the same to the plurality of multiplication modules 122, and may perform depthwise convolution operation.

According to the embodiment described above with reference to FIGS. 1 to 4, the electronic device 100 may efficiently perform a convolution operation by using a parallel hardware structure, for example, in a neural network accelerator.

Specifically, when performing a depthwise convolution operation, the electronic device 100 obtains an output value for every cycle from a time T₂ corresponding to a third cycle by arranging a kernel arranged in a horizontal direction in a 3D convolution operation in a channel direction to multiply one input value with each of a plurality of weight values through a plurality of multiplication modules 122 at the same time. Accordingly, whenever each output value is obtained, it is possible to achieve an improvement in operation efficiency (e.g., acceleration in calculations of convolution operations), which is three times higher than that of a related art requiring a calculation process of three cycles.

An example as shown in FIGS. 3-4B relates to a one-dimensional convolution operation during a depthwise convolution operation. The disclosure may be applied even when the disclosure performs a two-dimensional convolution operation during a depthwise convolution operation. An embodiment of the case of performing a two-dimensional convolution operation will be described in detail with reference to FIGS. 5 to 8.

The electronic device 100 according to the disclosure may perform a depthwise convolution operation as well as a 3D convolution operation, and a detailed process of performing a 3D convolution operation under an architecture according to the disclosure as illustrated in FIGS. 4A and 4B will be described in detail with reference to FIGS. 9 to 11.

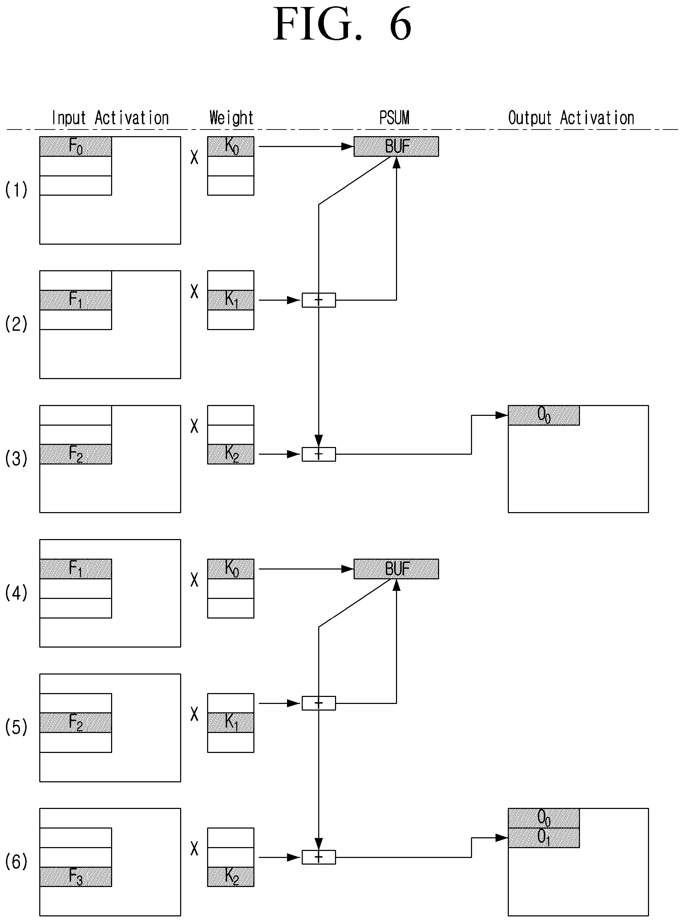

FIG. 5 is a block diagram illustrating a plurality of modules to perform a two-dimensional convolution operation according to the disclosure; FIGS. 6 to 8 are diagrams illustrating a part of a two-dimensional convolution operation according to various embodiments of the disclosure.

As shown in FIG. 5, the plurality of modules according to the disclosure may include the input selection module 121, a plurality of multiplication modules 122, and the intermediate value accumulation module 123, and in particular, the intermediate value accumulation module 123 may include a buffer 123-3. The "buffer 123-3" refers to a configuration of storing intermediate values corresponding to a row of a two-dimensional kernel among intermediate values obtained in a process of performing a two-dimensional convolution operation.

In detail, when performing a one-dimensional convolution operation with reference to FIGS. 1 to 4, intermediate values may be stored in registers included in the intermediate value accumulation module 123. When performing a two-dimensional convolution operation, the buffer 123-3 storing intermediate values corresponding to a row of a kernel may be required separately from the registers.

The processor 120 according to an embodiment of the disclosure may further include the buffer 123-3, and the buffer 123-3 may be used to store some of intermediate values obtained for each row of the kernel. Although FIG. 5 illustrates that the buffer 123-3 is a configuration included in the intermediate value accumulation module 123, the buffer 123-3 may be implemented as a component separate from the intermediate value accumulation module 123.

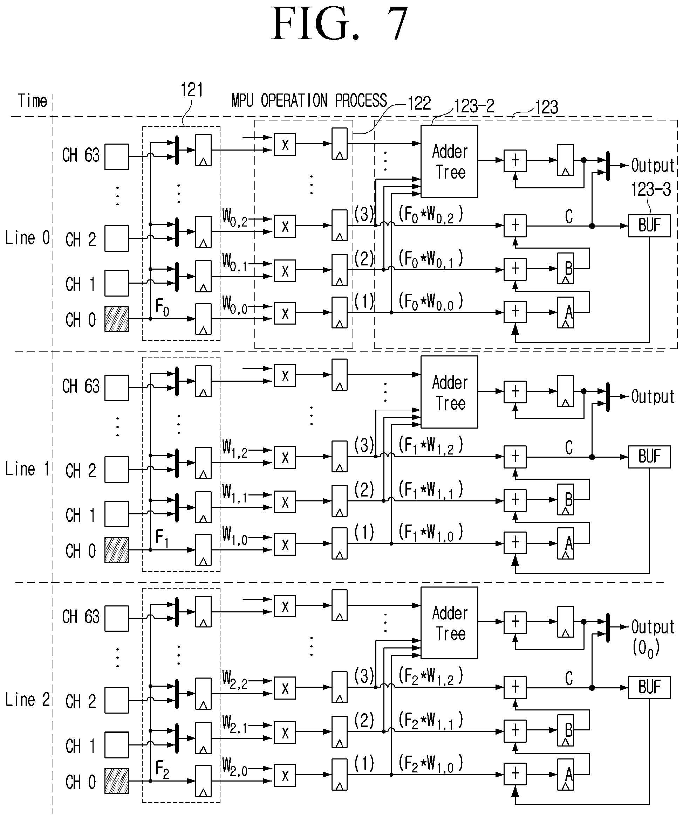

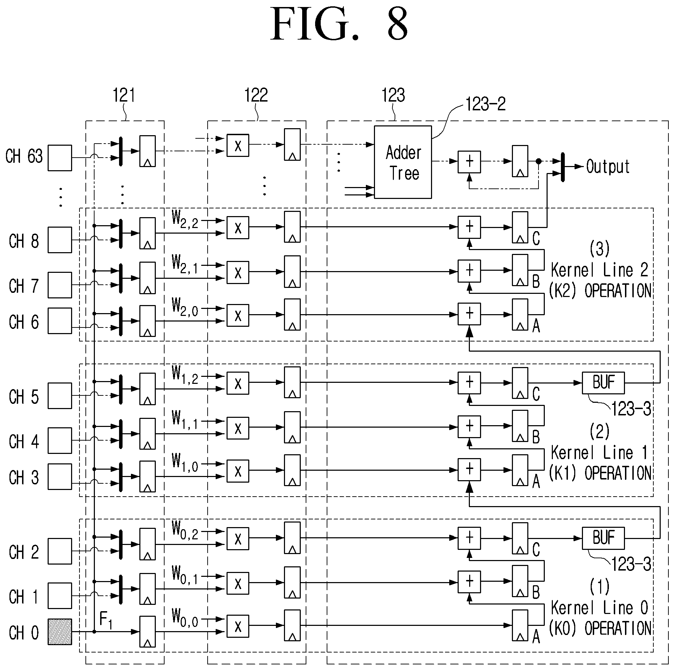

FIG. 6 is a diagram illustrating a method for obtaining a result according to a two-dimensional convolution operation by sequentially processing a one-dimensional convolution operation for each row, and FIG. 7 is a diagram illustrating an operation of a circuit including a plurality of modules according to the disclosure when performing the operation as shown in FIG. 6. FIG. 8 is a diagram illustrating a method of obtaining a result according to a two-dimensional convolution operation by using a plurality of multiplication modules 122 corresponding to the number of weights included in a two-dimensional kernel.

In FIGS. 6 to 8, as an example, a kernel has a size of 3 * 3 and a plurality of weights corresponding to the first channel is 9. Since FIGS. 6 to 8 illustrates a depthwise convolution operation, an operation process for input values corresponding to a first channel among a plurality of channels will be mainly described.

Referring to FIG. 6, a group of input values corresponding to each row among a plurality of input values is represented as F₀, F₁, F₂, and F₃ for convenience of description, and a group of weights corresponding to each row among a plurality of weights is represented as K₀, K₁, and K₂.

As shown in FIG. 6, the processor 120 may obtain a first intermediate value according to an operation result of an input value F0 of a first row and a weight value K0 of a first row through a plurality of multiplication modules 122, and store the obtained first intermediate value in the buffer 123-3. Alternatively or in addition, the processor 120 may obtain a second intermediate value according to an operation result of the input value F₁ of the second row and the weight K₁ of the second row through the plurality of multiplication modules 122, add the second intermediate value to the first intermediate value stored in the buffer 123-3 through the first intermediate value accumulation module 123-1, and store the sum value in the buffer 123-3.

Furthermore, the processor 120 may obtain a third intermediate value according to an operation result of a third row input value F₂ and a third row weight K₂ through the plurality of multiplication modules 122, and may obtain one output value O₀ by adding the third intermediate value to a sum value of the first intermediate value and the second intermediate value stored in the buffer 123-3. Here, "one output value" refers to one output value among output values corresponding to each case in which a two-dimensional kernel is located on a matrix of input data.

The processor 120 obtains the other output value O₁ by adding an intermediate value according to the calculation result of the input value F₁ of the second row and the weight K₀ of the first row, an intermediate value according to the operation result of the input value F₂ of the third row and the weight K₁ of the second row, and an intermediate value according to the operation result of the input value F₃ of the fourth row and the weight K₂ of the third row through the first intermediate value accumulation module 123-1.

FIG. 7 is a diagram illustrating a process of obtaining an output value (O₀) among operations of FIG. 6, and shows sequential operations for each of a first line (Line 0), a second row (Line 1), and a third row (Line 2). An operation performed for each line is the same as illustrated in FIGS. 4A and 4B, but in this example, the calculation should be accumulated up to an operation with a weight of a third row. Therefore, the buffer 123-3 is used to store an intermediate value obtained to sum an intermediate value obtained by the calculation of each row with a calculation result of another row.

In FIG. 7, a set of input values corresponding to each row among a plurality of input values is expressed as F₀, F₁, and F₂, and a set of weights corresponding to each row among the plurality of weights is represented by W_{0,0}, W_{0,1}, W_{0,2}, W_{1,0}, W_{1,1}, W_{1,2}, W_{2,0}, W_{2,1} and W_{2,2}. In the symbol of W_{m,n}, m is a serial number indicating which number of row of the kernel m belongs to, and n is a serial number indicating which number of column of the kernel n belongs to. The weights of W_{0,0}, W_{0,1}, and weights of W_{1,0}, W_{1,1}, and W_{1,2}, and the weights W_{2,0},W_{2,1}, and W_{2,2} may be constructed in a multi-channel form and stored in the memory 110 as second kernel information.

Specifically, when an input value F₀ of the first row among a plurality of input values corresponding to a first channel is input to the input selection module 121, the processor 120 may control the input selection module 121 such that the F₀ is input to the multiplication module 122 corresponding to the first channel, and also the multiplication module 122 corresponding to each of the second channel and the third channel adjacent to the first channel. The processor 120 may input a plurality of weights W_{0,0}, W_{0,1}, and W_{0,2}, one by one, corresponding to the first row to each of three multiplication modules 122 corresponding to each of the first channel, the second channel, and the third channel.

When an input value F₀ is input to all three multiplication modules 122 corresponding to each of a first channel, a second channel, and a third channel, and weights W_{0,0}, W_{0,1}, and W_{0,2} are input to each of three multiplication modules 122, one by one, the processor 120 may perform a multiplication operation between F₀ and W_{0,0} through the multiplication module 122 corresponding to a first channel to obtain an intermediate value called F₀*W_{0,0}, and may perform a multiplication operation between F₀ and W_{0,1} through the multiplication module 122 corresponding to a second channel to obtain an intermediate value called F₀ * W_{0,1}, and may perform a multiplication operation between F₀ and W_{0,2} through the multiplication module 122 corresponding to the third channel to obtain an intermediate value of F₀*W_{0,2}.

The processor 120 may obtain an output value corresponding to the input value F₀ of the first row by summing the intermediate values through the first intermediate value accumulation module 123-1, and store the intermediate value of the output value O₀ corresponding to the input value F₀ in the first row in the buffer 123-3.

When an output value corresponding to the input value F₁ of the second row is obtained, in the same manner as the process of obtaining an output value corresponding to the input value F₀ of the first row, the processor 120 may add an output value corresponding to the input value F₁ of the second row to an intermediate value stored in the buffer 123-3 through the first intermediate value accumulation module 123-1 and store the sum value in the buffer 123-3.

Furthermore, when an output value corresponding to the input value F₂ of the third row is obtained in the same manner as the process of obtaining an output value corresponding to the input value F₀ of the first row and an output value corresponding to the input value F₁ of the second row, the processor 120 may obtain one output value O₀ by summing the output value corresponding to the input value F₂ of the third row with the summation value stored in the buffer 123-3 to through the first intermediate value accumulation module 123-1.

According to the embodiment described above with reference to FIGS. 6 and 7, the electronic device 100 may perform an one-dimensional convolution operation by using the plurality of multiplication modules 122 in parallel, and may obtain a result based on a two-dimensional convolution operation by adding the result of each one-dimensional convolution operation. Accordingly, the electronic device 100 may perform a two-dimensional convolution operation. That is, as described above, when the number of weights included in the two-dimensional kernel is nine, and the output value is obtained by accumulating the one-dimensional convolution operation for the three weights, the electronic device 100 may achieve the improvement of the operation efficiency by three times.

The electronic device 100 may perform a two-dimensional convolution operation by only adding one buffer 123-3 for cumulatively storing each result of the one-dimensional convolution operation, the electronic device 100 may perform a two-dimensional convolution operation by using a hardware area compared to the embodiment of FIG. 8 described below.

FIG. 8 is a diagram illustrating a method for performing a two-dimensional convolution operation by using a plurality of multiplication modules 122 corresponding to the number of weights included in a two-dimensional kernel in parallel. In FIG. 7, operations are sequentially performed from a first row to a third row of the weight In contrast, in FIG. 8, an intermediate value of different output values O₀, O₁, and O₂ may be simultaneously obtained by simultaneously performing operations from a first row to a third row of a weight with respect to an input of the same row. Like FIG. 7, in FIG. 8, a set of weights corresponding to each row among a plurality of weights is represented by W_{0,0,} W_{0,1}, W_{0,2,} W_{1,0,} W_{1,1,} W_{1,2,} W_{2,0,} W_{2,1,} and W_{2,2}. The weights of W_{0,0,} W_{0,1,} W_{0,2,} W_{1,0,} W_{1,1,} W_{1,2,} W_{2,0,} W_{2,1} and W_{2,2} are constructed in the form of a multi-channel of 1*1*9 (horizontal * vertical * depth) and stored in the memory 110 as second kernel information.

As shown in (1) of FIG. 6, when a plurality of first row input values F₀ are input, the processor 120 may perform a multiplication operation with a weight K₀ of a first row, and an intermediate value according to the operation result may be stored in the buffer 123-3 to accumulate an input value of another row and an operation with a weight. This operation may be performed by a multiplication module of three channels (Kernel Line 0) shown in (1) of FIG. 8, and an intermediate value according to an operation result may be stored in the buffer 123-3.

Next, as shown in (2) of FIG. 6, when an input value F1 of a plurality of second rows is input, the processor 120 may obtain an intermediate value for an output value O₀ by summing an output value obtained by performing an operation with a weight K₁ of a second row in the operation unit illustrated in (2) of FIG. 8 and a buffer value (F₀ * K₀) pre-stored. At the same time, the processor 120 may obtain an intermediate value for the output value O₁ by calculating the same input value F₁ with the weight K₀ of the first row as shown in (4) of FIG. 6. That is, the operation circuit of (1) and (2) of FIG. 8 may operate simultaneously. The buffer 123-3 in which the output value corresponding to the weight K₁ of the second row is stored may be different from the buffer 123-3 in which the output value corresponding to the weight K₀ of the first row is stored.

When an input value F₂ of a plurality of third rows is input, the processor 120 may obtain an output value O₀ by adding a result obtained by performing an operation with a weight K₂ of a third row as shown in (3) of FIG. 6 and a buffer value pre-stored. This operation unit corresponds to (3) of FIG. 8. At the same time, (1) and (2) of FIG. 8 may store a result of an intermediate value obtained by performing an operation with a second row weight K₁ and a first row weight K₀ to calculate different output values O₁ and O₂ in the buffer 123-3.

The processor 120 obtains intermediate values corresponding to the row of the kernel and stores the intermediate values in the buffer 123-3, and accumulates the intermediate values obtained for each row in the column direction to perform a two-dimensional convolution operation, but according to another embodiment, the processor 120 may perform a two-dimensional convolution operation by obtaining intermediate values corresponding to the column of the kernel and storing the intermediate values in the buffer 123-3 and accumulating the intermediate values obtained for each column in the row direction.

According to the embodiment described above with reference to FIG. 8, the electronic device 100 efficiently performs a two-dimensional convolution operation process by using the multiplication module 122 as many as the number of weights included in the two-dimensional kernel in parallel. Specifically, when the number of weights included in a two-dimensional kernel is nine as in the above-described example, the electronic device 100 may achieve an improvement in calculation efficiency by 9 times.

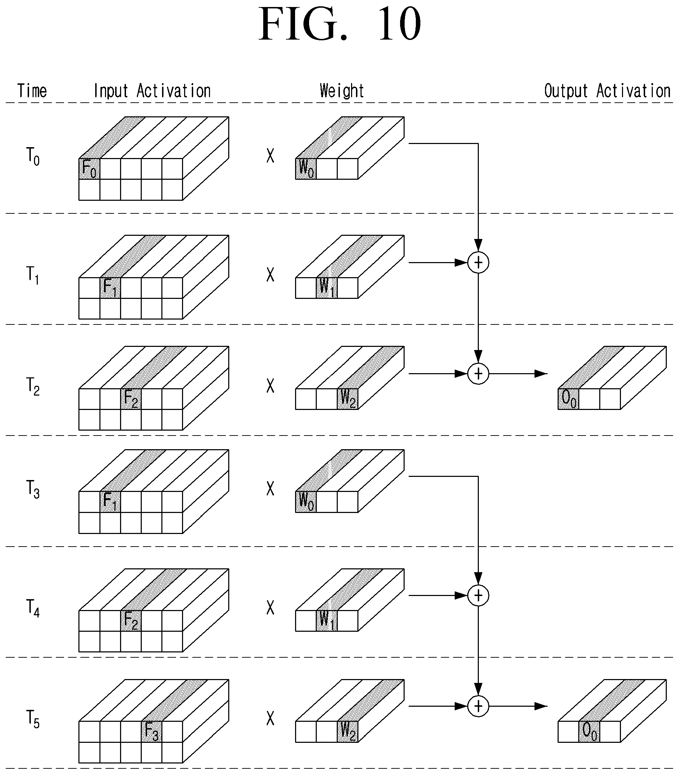

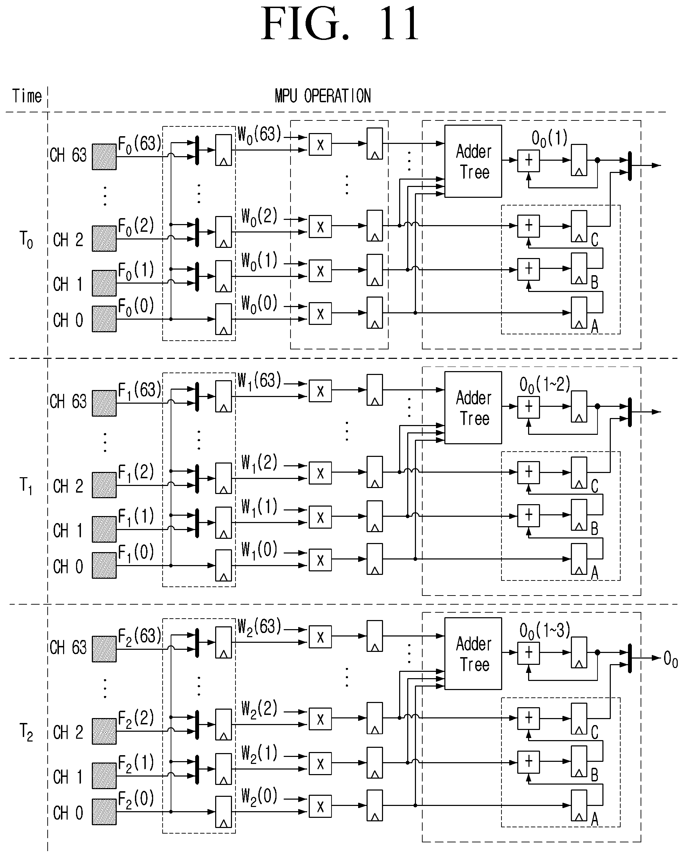

FIG. 9 is a block diagram illustrating a plurality of modules to perform a 3D convolution operation according to an embodiment of the disclosure; FIGS. 10 and 11 are diagrams illustrating a part of a 3D convolution operation according to various embodiments of the disclosure.

Various embodiments of the disclosure have been made on the basis of the case in which a depthwise convolution operation is performed, but as described above, the processor 120 may perform a 3D convolution operation by using a plurality of modules according to the disclosure.

As shown in FIG. 9, the plurality of modules according to the disclosure may include the input selection module 121, a plurality of multiplication modules 122, and the intermediate value accumulation module 123. In particular, the intermediate value accumulation module 123 may include the first intermediate value accumulation module 123-1 and the second intermediate value accumulation module 123-2. Here, the "first intermediate value accumulation module 123-1" refers to a module for obtaining an output value by summing intermediate values obtained in a depthwise convolution operation process as described above with reference to FIGS. 1 to 8. The "second intermediate value accumulation module 123-2" refers to a module for acquiring an output value by summing intermediate values acquired in a 3D convolution operation process. The second intermediate value accumulation module 123-2 according to the disclosure may be referred to as a so-called 'adder tree.' That is, the configuration indicated as the adder tree of FIG. 10 represents a second intermediate value accumulation module 123-2 according to the disclosure.

In the 3D convolution operation, operations between input values included in three-dimensional input data and weights included in a three-dimensional kernel are performed. All of a plurality of multiplication modules 122 corresponding to each of the plurality of channels are used. Specifically, in a 3D convolution operation, a convolution operation is performed between a set of input values having the same row and column and different depths among input values included in input data and a set of weights having the same rows and columns and different depths among the weights included in the kernel. Accordingly, in inputting weights to a plurality of multiplication modules 122 in a 3D convolution operation, first kernel information may be used instead of second kernel information converted into a multi-channel form.

Specifically, FIG. 10 is a diagram illustrating a process of obtaining an output value based on an input value and a weight at time T₀ to T₅ when performing a 3D convolution operation. FIG. 11 is a diagram illustrating an operation of a circuit including a plurality of modules according to the disclosure when performing the operation as shown in FIG. 10.

In particular, in the description of FIGS. 10 and 11, a case in which a three-dimensional kernel has a size of 3 * 1 * 64 (horizontal * vertical * depth) is described as an example. In FIG. 10, a set of input values having the same rows and columns and different depths among input values included in the input data are represented as F₀, F₁, F₂, and F₃, respectively. In FIG. 10, a set of weights having the same row and column and different depths among the weights included in the kernel are shown as W₀, W₁, and W₂.

At the time of T₀, the processor 120 may control the input selection module 121 such that the input values included in the F₀ are input to the multiplication module 122 of the channel corresponding to each input value. The processor 120 may control the input selection module 121 such that an input value by a plurality of channels are input to the multiplication module 122 of the corresponding channel in the same manner as the input value corresponding to the first channel among the input values included in the F₀ is input to the multiplication module 122 corresponding to the first channel. An input value corresponding to the second channel is input to the multiplication module 122 corresponding to the second channel.

The processor 120 may input weights included in W₀ to the multiplication module 122 of a channel corresponding to each weight. For example, the processor 120 may input a weight by a plurality of channels to the multiplication module 122 of the corresponding channel in the same manner as the weight corresponding to the first channel among the weights included in the W₀ is input to the multiplication module 122 corresponding to the first channel. The weight corresponding to the second channel is input to the multiplication module 122 of the corresponding channel.

When input values included in F₀ and weights included in W₀ are input to a plurality of multiplication modules 122, the processor 120 may obtain a first intermediate value according to a multiplication operation result of an input value (F₀(0)) of a first channel included in the F0 and a weight value (W₀(0)) of a first channel included in the WO through a multiplication module 122 corresponding to the first channel, obtain a second intermediate value according to a multiplication operation result of a second channel input value (F₀(1)) included in the F0 and a weight value (W₀(1)) of a second channel included in the WO through the multiplication module 122 corresponding to the second channel, and obtain intermediate values corresponding to each of the third channel to the 64^{th} channel in a similar manner.

When intermediate values corresponding to each of the first to 64^{th} channels are obtained, the processor 120 may sum intermediate values corresponding to each of the first to 64^{th} channels through the second intermediate value module to obtain a first sum value (O₀(1)) according to the summation result.

At time T₁, the processor 120 may obtain a second sum value O₀(2), and add the first sum value O₀(1) and the second sum value O₀(2) to obtain a sum value O₀(1~2) according to the summation result.

In addition, at time T₂, the processor 120 may obtain a third sum value O₀(3), sum the first sum value O₀(1), the second sum value O₀(2), and the third sum value O₀(3), and obtain one output value O₀ according to the summation result in the same manner as the process of obtaining the first summation value O₀(1) and the second summation value O₀(2). Here, one output value refers to one output value among output values corresponding to each case where a three-dimensional kernel is located on a matrix of input data.

According to the embodiment described above with reference to FIGS. 9-11, the electronic device 100 may not only efficiently perform a depthwise convolution operation under one hardware structure, but also perform a 3D convolution operation.

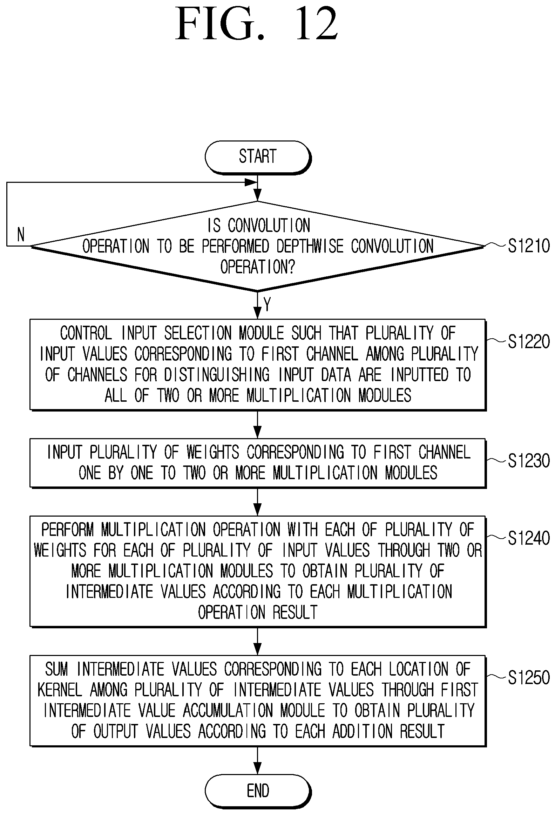

FIG. 12 is a flowchart illustrating a method of controlling an electronic device according to an embodiment of the disclosure. As described above, the electronic device 100 may perform a convolution operation on the basis of input values included in the input data and weights included in the kernel. In particular, the electronic device 100 may perform a depthwise convolution operation and a 3D convolution operation by using the input selection module 121, a plurality of multiplication modules 122, and the intermediate value accumulation module 123 according to the disclosure.

Referring to FIG. 12, the electronic device 100 may identify whether a convolution operation to be performed is a depthwise convolution operation in operation S1210. When a convolution operation to be performed is a depthwise convolution operation in operation S1210-Y, the electronic device 100 may control the input selection module 121 such that a plurality of input values corresponding to a first channel among a plurality of channels for distinguishing input data are input to all of two or more multiplication modules 122 among the plurality of multiplication modules 122 in operation S1220.

In other words, the electronic device 100 according to the disclosure controls the input selection module 121 such that whenever each of a plurality of inputs corresponding to the first channel is input to the input selection module 121, the input value is input to all the multiplication modules 122 as many as the number of a plurality of weights included in the kernel, unlike the depthwise convolution operation in the related art in which input values corresponding to the first channel are input to the multiplication module 122 corresponding to the first channel.

The electronic device 100 inputs a plurality of weights corresponding to a first channel, one by one, to two or more multiplication modules 122 in operation S1230. In other words, the electronic device 100 according to the disclosure may input a plurality of weights corresponding to a first channel one by one to two or more multiplication modules 122 on the basis of second kernel information in the form of a multi-channel, unlike the depthwise convolution operation in the related art in which a plurality of weights corresponding to the first channel are input only to the multiplication module 122 corresponding to the first channel.

The electronic device 100 performs a multiplication operation with each of a plurality of weights for each of a plurality of input values through two or more multiplication modules 122 to obtain a plurality of intermediate values according to each multiplication operation result in operation S1240. In addition, the electronic device 100 sums intermediate values corresponding to each location of a kernel among a plurality of intermediate values through the first intermediate value accumulation module 123-1 to obtain a plurality of output values according to each addition result in operation S1250.

The operations of the control method of the electronic device 100 according to the disclosure have been briefly described above, but this is only to omit the redundant description of the same contents, and various embodiments related to the control process by the processor 120 may be applied to the control method of the electronic device 100 as well.

The control method of the electronic device 100 according to the above-described embodiment may be implemented as a program and provided to the electronic device 100. In particular, a program including a control method of the electronic device 100 wherein the program is stored and provided in a non-transitory computer readable medium.

Specifically, in a non-transitory computer-readable recording medium including a program for executing a control method of the electronic device 100, when a convolution operation is a depthwise convolution operation, the method for controlling the electronic device 100 may include controlling the input selection module 121 such that each of a plurality of input values corresponding to a first channel among a plurality of channels for distinguishing input data is input to all of a plurality of multiplication modules 122 corresponding to each of two or more channels among a plurality of channels; inputting each of the plurality of weights corresponding to the first channel to the plurality of multiplication modules 122 one by one; obtaining a plurality of intermediate values according to each of multiplication operation results by performing a multiplication operation with each of the plurality of weights for each of the plurality of input values through the plurality of multiplication modules 122; and obtaining a plurality of output values according to the sum result by summing intermediate values corresponding to each of the plurality of weights among the plurality of intermediate values through the first intermediate value accumulation module 123-1.

The non-transitory computer readable medium may include a medium that stores data semi-permanently rather than storing data for a very short time, such as a register, a cache, a memory, etc., and is readable by an apparatus (i.e., executable by at least one processor). For example, the aforementioned various applications or programs may be stored in the non-transitory computer readable medium, for example, a Compact Disc (CD), a Digital Versatile Disc (DVD), a hard disc, a Blu-ray disc, a Universal Serial Bus (USB), a memory card, a Read Only Memory (ROM), and the like, and may be provided.

The controlling method of the electronic device 100 and the non-transitory computer-readable recording medium including a program for executing a controlling method of the electronic device 100 are described in brief, but this is merely to avoid repetitive description, and the various embodiments of the electronic device 100 may be applied to the controlling method of the electronic device 100, and a computer-readable recording medium including a program executing a controlling method of the electronic device 100.

According to one or more embodiments of the disclosure as described above, an electronic device may efficiently perform a depthwise convolution operation. A function related to the neural network model and a convolution operation process may be performed through the memory 110 and the processor 120.

The processor 120 may include one or a plurality of processors 142. At this time, one or a plurality of processors 120 may be a general purpose processor, such as a Central Processing Unit (CPU), an Application Processor (AP), or the like, a graphics-only processing unit such as a Graphics Processing Unit (GPU), a Visual Processing Unit (VPU), or an AI-dedicated processor such as a Neural Processing Unit (NPU), MPU.

The one or a plurality of processors 120 control the processing of the input data in accordance with a predefined operating rule or Artificial Intelligence (AI) model stored in the non-volatile memory 110A and the volatile memory 110B. The predefined operating rule or artificial intelligence model is provided through training or learning.

Being provided through learning may refer, for example, to, by applying a learning algorithm to a plurality of learning data, a predefined operating rule or AI model of a desired characteristic being made. The learning may be performed in a device itself in which AI according to an embodiment is performed, and/or may be implemented through a separate server/system.

The AI model may include a plurality of neural network layers. Each layer has a plurality of weight values, and performs a layer operation through calculation of a previous layer and an operation of a plurality of weights. Examples of neural networks include, but are not limited to, CNN, Deep Neural Network (DNN), Recurrent Neural Network (RNN), Restricted Boltzmann Machine (RBM), Deep Belief Network (DBN), Bidirectional Recurrent Deep Neural Network (BRDNN), Generative Adversarial Networks (GAN), and deep Q-networks.

The learning algorithm may include a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

The machine-readable storage medium is provided in the form of a non-transitory storage medium. The, "non-transitory" storage medium may not include a signal and is tangible, but does not distinguish whether data is permanently or temporarily stored in a storage medium. For example, the "non-transitory storage medium" may include a buffer 123-3 in which data is temporarily stored.

According to various embodiments, a method disclosed herein may be provided in a computer program product. A computer program product may be traded between a seller and a purchaser as a commodity. A computer program product may be distributed in the form of a machine readable storage medium (e.g., compact disc ROM (CD-ROM)) or distributed online through an application store (e.g., PlayStore^{™}) or distributed (e.g., download or upload) online between two user devices (e.g., smartphones) directly. In the case of on-line distribution, at least a portion of the computer program product (e.g., a downloadable app) may be stored temporarily or at least temporarily in a storage medium such as a manufacturer's server, a server in an application store, or the memory in a relay server.

Alternatively or in addition, each of the components (e.g., modules or programs) according to one or more embodiments may include a single entity or a plurality of entities, and some sub-components of the sub-components described above may be omitted, or other sub-components may be further included in the various embodiments, within the scope of the appended claims. Alternatively or additionally, some components (e.g., modules or programs) may be integrated into one entity to perform the same or similar functions performed by the respective components prior to the integration, within the scope of the appended cliams.

The operations performed by the module, the program, or other component, in accordance with various embodiments may be performed in a sequential, parallel, iterative, or heuristic manner, or at least some operations may be executed in a different order or omitted, or other operations may be added, without departing from the scope of the appended claims.

The term "unit" or "module" used in the disclosure includes units includes hardware, software, or firmware, or any combination thereof, and may be used interchangeably with terms such as, for example, logic, logic blocks, parts, or circuits. A "unit" or "module" may be an integrally constructed component or a minimum unit or part thereof that performs one or more functions. For example, the module may be configured as an Application-Specific Integrated Circuit (ASIC).

Embodiments may be implemented as software that includes instructions stored in machine-readable storage media readable by a machine (e.g., a computer). A device may call instructions from a storage medium and that is operable in accordance with the called instructions, including an electronic device (e.g., the electronic device 100).

When the instruction is executed by a processor, the processor may perform the function corresponding to the instruction, either directly or under the control of the processor, using other components. The instructions may include a code generated by a compiler or a code executed by an interpreter.

While the disclosure has been illustrated and described with reference to various example embodiments, it will be understood that the various example embodiments are intended to be illustrative, not limiting, within the scope of the appended claims. One of ordinary skill in the art will understand that various changes in form and detail may be made without departing from the scope of the disclosure as defined in the appended claims.

## Claims

1. An electronic device (100) comprising:
a memory (110) configured to store three-dimensional input data comprising (i) a plurality of input values divided based on a plurality of channels, (ii) first kernel information on a kernel, the first kernel information comprising a plurality of weights for each of the plurality of channels, and (iii) second kernel information generated by converting the plurality of weights that are configured in a two-dimensional, horizontal * vertical, matrix form for each of the plurality of channels, to a multi-channel three-dimensional matrix form, so that the plurality of weights for each of the plurality of channels of the first kernel information are arranged in the depth direction of the plurality of channels; and
a processor (120) comprising a plurality of multiplication hardware modules (122) corresponding to the plurality of channels, wherein the number of the plurality of multiplication modules is the same as the number of the plurality of weights of the plurality of channels, and wherein the processor is configured to perform either one or both of a 3D convolution operation and a depthwise convolution operation, based on the plurality of input values and the plurality of weights through the plurality of multiplication modules,
wherein the processor is further configured to:
based on the convolution operation being a depthwise convolution operation, control an input selection hardware module (121) included in the processor to input a plurality of input values that correspond to a first channel among the plurality of channels to all two or more multiplication modules corresponding to all of the channels among the plurality of multiplication modules,
wherein the processor is further configured to:
input a first set of weights corresponding to the first channel, one by one, to all two or more multiplication modules corresponding to all of the channels, based on the second kernel information,
obtain a plurality of intermediate values based on each of the multiplication operation results by performing a multiplication operation with each of the plurality of weights for each of the plurality of input values through all the two or more multiplication modules in parallel, and
obtain a plurality of output values based on each of a summed result by summing intermediate values respectively corresponding to locations of the kernel from among the plurality of intermediate values through a first intermediate value accumulation hardware module (123-1) included in the processor,
wherein each of the plurality of input values corresponding to the first channel is an input to the input selection module for each preset cycle of a plurality of cycles, and
wherein the input selection module is configured to transmit each of the plurality of input values to the two or more multiplication modules for each preset cycle of the plurality of cycles.

2. The electronic device of claim 1, wherein the plurality of channels comprise the first channel and at least one channel adjacent to the first channel, and
wherein a number of the two or more multiplication modules is equal to a number of the plurality of weights included in the first kernel information.

3. The electronic device of claim 1, wherein the kernel is a two-dimensional kernel, and
wherein the processor further comprises a buffer (123-3) storing intermediate values corresponding to a row of the kernel among the plurality of intermediate values, and
wherein the processor obtains the plurality of output values by summing intermediate values corresponding to each of locations of the kernel among the intermediate values stored in the buffer through the first intermediate value accumulation module.

4. The electronic device of claim 3, wherein the processor is further configured to obtain the plurality of output values by performing the convolution operation by using the two or more multiplication modules is equal to to the number of the plurality of weights included in the kernel in parallel.

5. The electronic device of claim 1, wherein the processor is further configured to: based on the convolution operation being a three-dimensional convolution operation, control the input selection module to bypass the input values that are input to the input selection module to the plurality of multiplication modules, and
input a second set of weights corresponding to each of the plurality of multiplication modules to the plurality of multiplication modules based on the first kernel information.

6. The electronic device of claim 5, wherein the processor further comprises a second intermediate value accumulation module (123-2) to sum intermediate values for each of the plurality of channels obtained through the plurality of multiplication modules.

7. A method of controlling an electronic device according to claim 1, the method comprising:
based on the convolution operation being a depthwise convolution operation, control an input selection hardware module (121) included in the processor to input a plurality of input values that correspond to a first channel among the plurality of channels to all two or more multiplication modules corresponding to all of the channels among the plurality of multiplication modules, wherein each of the plurality of input values corresponding to the first channel are input to the input selection module for each preset cycle of a plurality of cycles, and wherein the input selection module transmits each of the plurality of input values input to each preset cycle of the plurality of cycles to all the two or more multiplication modules;
wherein the method further comprises:
input a first set of weights corresponding to the first channel, one by one, to all two or more multiplication modules corresponding to all of the channels, based on the second kernel information,
obtain a plurality of intermediate values based on each of the multiplication operation results by performing a multiplication operation with each of the plurality of weights for each of the plurality of input values through all the two or more multiplication modules in parallel, and
obtain a plurality of output values based on each of a summed result by summing intermediate values respectively corresponding to locations of the kernel from among the plurality of intermediate values through a first intermediate value accumulation hardware module (123-1) included in the processor.

8. The method of claim 7, wherein the plurality of channels comprise the first channel and at least one channel adjacent to the first channel, and
wherein a number of the two or more multiplication modules is equal to a number of the plurality of weights included in the first kernel information.

9. The method of claim 7, wherein the kernel is a two-dimensional kernel,
Wherein the method further comprises obtaining the plurality of output values by summing intermediate values corresponding to each of locations of the kernel among intermediate values stored in a buffer through the first intermediate value accumulation module, and
wherein the buffer is configured to store intermediate values corresponding to a row of the kernel among the plurality of intermediate values.

10. The method of claim 9, wherein the method further comprises obtaining the plurality of output values by performing the convolution operation by using two or more multiplication modules equal to the number of the plurality of weights included in the kernel in parallel.

11. The method of claim 7, wherein the method further comprises:
based on the convolution operation being a three-dimensional convolution operation, controlling the input selection module to bypass the plurality of input values input to the input selection module to the plurality of multiplication modules; and
inputting a second set of weights corresponding to each of the plurality of multiplication modules to the plurality of multiplication modules based on the first kernel information.

12. The method of claim 11, wherein the electronic device further comprises a second intermediate value accumulation module to sum intermediate values for each of a plurality of channels obtained through the plurality of multiplication modules.

13. A non-transitory computer readable recording medium comprising a program, which when executed by an electronic device according to claim 1, cause the electronic device to execute a control method thereof, wherein the control method comprises:
based on the convolution operation being a depthwise convolution operation, control an input selection hardware module (121) included in the processor to input a plurality of input values that correspond to a first channel among the plurality of channels to all two or more multiplication modules corresponding to all of the channels among the plurality of multiplication modules, wherein each of the plurality of input values corresponding to the first channel are input to the input selection module for each preset cycle of a plurality of cycles, and wherein the input selection module transmits each of the plurality of input values input to each preset cycle of the plurality of cycles to all the two or more multiplication modules;
wherein the method further comprises:
input a first set of weights corresponding to the first channel, one by one, to all two or more multiplication modules corresponding to all of the channels, based on the second kernel information,
obtain a plurality of intermediate values based on each of the multiplication operation results by performing a multiplication operation with each of the plurality of weights for each of the plurality of input values through all the two or more multiplication modules in parallel, and
obtain a plurality of output values based on each of a summed result by summing intermediate values respectively corresponding to locations of the kernel from among the plurality of intermediate values through a first intermediate value accumulation hardware module (123-1) included in the processor.

## Patentansprüche

1. Elektronische Vorrichtung (100), umfassend:
einen Speicher (110), der so konfiguriert ist, dass er dreidimensionale Eingabedaten speichert, umfassend: (i) eine Vielzahl von Eingabewerten, die basierend auf einer Vielzahl von Kanälen unterteilt sind, (ii) erste Kernel-Informationen über einen Kernel, wobei die ersten Kernel-Informationen eine Vielzahl von Gewichtungen für jeden der Vielzahl von Kanälen umfassen, und (iii) zweite Kernel-Informationen, die durch Umwandeln der Vielzahl von Gewichtungen, die für jeden der Vielzahl von Kanälen in einer zweidimensionalen, horizontalen * vertikalen, Matrixform konfiguriert sind, in eine mehrkanalige dreidimensionale Matrixform erzeugt werden, sodass die Vielzahl von Gewichtungen für jeden der Vielzahl von Kanälen der ersten Kernel-Informationen in der Tiefenrichtung der Vielzahl von Kanälen angeordnet ist; und
einen Prozessor (120), der eine Vielzahl von Multiplikationshardwaremodulen (122) umfasst, die der Vielzahl von Kanälen entspricht, wobei die Anzahl der Vielzahl von Multiplikationsmodulen gleich der Anzahl der Vielzahl von Gewichtungen der Vielzahl von Kanälen ist, und wobei der Prozessor so konfiguriert ist, dass er entweder einen oder beide von einem 3D-Faltungsvorgang und einem Tiefenfaltungsvorgang basierend auf der Vielzahl von Eingabewerten und der Vielzahl von Gewichtungen über die Vielzahl von Multiplikationsmodulen durchführt,
wobei der Prozessor ferner konfiguriert ist zum:
basierend darauf, dass der Faltungsvorgang ein Tiefenfaltungsvorgang ist, Steuern eines Eingabeauswahlhardwaremoduls (121), das im Prozessor enthalten ist, sodass es eine Vielzahl von Eingabewerten, die einem ersten Kanal aus der Vielzahl von Kanälen entspricht, in alle zwei oder mehr Multiplikationsmodule, die allen Kanälen entsprechen, aus der Vielzahl von Multiplikationsmodulen eingibt,
wobei der Prozessor ferner konfiguriert ist zum:
Eingeben eines ersten Satzes von Gewichtungen, der dem ersten Kanal entspricht, nacheinander in alle zwei oder mehr Multiplikationsmodule, die allen Kanälen entsprechen, basierend auf den zweiten Kernel-Informationen,
Erhalten einer Vielzahl von Zwischenwerten basierend auf jedem der Multiplikationsvorgangsergebnisse durch paralleles Durchführen eines Multiplikationsvorgangs mit jeder der Vielzahl von Gewichtungen für jeden der Vielzahl von Eingabewerten über alle zwei oder mehr Multiplikationsmodule, und
Erhalten einer Vielzahl von Ausgabewerten basierend auf jedem eines summierten Ergebnisses durch Summieren von Zwischenwerten, die jeweils Positionen des Kernels entsprechen, aus der Vielzahl von Zwischenwerten über ein erstes Zwischenwertakkumulierungshardwaremodul (123-1), das im Prozessor enthalten ist,
wobei jeder der Vielzahl von Eingabewerten, die dem ersten Kanal entspricht, für jeden voreingestellten Zyklus einer Vielzahl von Zyklen eine Eingabe in das Eingabeauswahlmodul ist, und
wobei das Eingabeauswahlmodul so konfiguriert ist, dass es für jeden voreingestellten Zyklus der Vielzahl von Zyklen jeden der Vielzahl von Eingabewerten an die zwei oder mehr Multiplikationsmodule überträgt.

2. Elektronische Vorrichtung nach Anspruch 1, wobei die Vielzahl von Kanälen den ersten Kanal und mindestens einen an den ersten Kanal angrenzenden Kanal umfasst, und
wobei die Anzahl der zwei oder mehr Multiplikationsmodule gleich der Anzahl der Vielzahl von Gewichtungen ist, die in den ersten Kernel-Informationen enthalten ist.

3. Elektronische Vorrichtung nach Anspruch 1, wobei der Kernel ein zweidimensionaler Kernel ist, und
wobei der Prozessor ferner einen Puffer (123-3) umfasst, der Zwischenwerte, die einer Zeile des Kernels entsprechen, aus der Vielzahl von Zwischenwerten speichert, und
wobei der Prozessor die Vielzahl von Ausgabewerten durch Summieren der Zwischenwerte, die jeder der Positionen des Kernels entsprechen, aus den im Puffer gespeicherten Zwischenwerten über das erste Zwischenwertakkumulierungsmodul erhält.

4. Elektronische Vorrichtung nach Anspruch 3, wobei der Prozessor ferner so konfiguriert ist, dass er die Vielzahl von Ausgabewerten durch paralleles Durchführen des Faltungsvorgangs unter Verwendung der zwei oder mehr Multiplikationsmodule gleich der Anzahl der Vielzahl von Gewichtungen, die in dem Kernel enthalten ist, erhält.

5. Elektronische Vorrichtung nach Anspruch 1, wobei der Prozessor ferner konfiguriert ist zum: basierend darauf, dass der Faltungsvorgang ein dreidimensionaler Faltungsvorgang ist, Steuern des Eingabeauswahlmoduls, um die Eingabewerte, die in das Eingabeauswahlmodul eingegeben werden, an die Vielzahl von Multiplikationsmodulen umzuleiten, und
Eingeben eines zweiten Satzes von Gewichtungen, der jedem der Vielzahl von Multiplikationsmodulen entspricht, in die Vielzahl von Multiplikationsmodulen basierend auf den ersten Kernel-Informationen.

6. Elektronische Vorrichtung nach Anspruch 5, wobei der Prozessor ferner ein zweites Zwischenwertakkumulierungsmodul (123-2) umfasst, um Zwischenwerte für jeden der Vielzahl von Kanälen zu summieren, die durch die Vielzahl von Multiplikationsmodulen erhalten werden.

7. Verfahren zum Steuern einer elektronischen Vorrichtung nach Anspruch 1, wobei das Verfahren Folgendes umfasst:
basierend darauf, dass der Faltungsvorgang ein Tiefenfaltungsvorgang ist, Steuern eines Eingabeauswahlhardwaremoduls (121), das im Prozessor enthalten ist, sodass es eine Vielzahl von Eingabewerten, die einem ersten Kanal aus der Vielzahl von Kanälen entspricht, in alle zwei oder mehr Multiplikationsmodule, die allen Kanälen entsprechen, aus der Vielzahl von Multiplikationsmodulen eingibt, wobei jeder der Vielzahl von Eingabewerten, die dem ersten Kanal entspricht, für jeden voreingestellten Zyklus einer Vielzahl von Zyklen in das Eingabeauswahlmodul eingegeben wird, und wobei das Eingabeauswahlmodul jeden der Vielzahl von Eingabewerten, die in jedem voreingestellten Zyklus der Vielzahl von Zyklen eingegeben werden, an alle zwei oder mehr Multiplikationsmodule überträgt;
wobei das Verfahren ferner Folgendes umfasst:
Eingeben eines ersten Satzes von Gewichtungen, der dem ersten Kanal entspricht, nacheinander in alle zwei oder mehr Multiplikationsmodule, die allen Kanälen entsprechen, basierend auf den zweiten Kernel-Informationen,
Erhalten einer Vielzahl von Zwischenwerten basierend auf jedem der Multiplikationsvorgangsergebnisse durch paralleles Durchführen eines Multiplikationsvorgangs mit jeder der Vielzahl von Gewichtungen für jeden der Vielzahl von Eingabewerten über alle zwei oder mehr Multiplikationsmodule, und
Erhalten einer Vielzahl von Ausgabewerten basierend auf jedem eines summierten Ergebnisses durch Summieren von Zwischenwerten, die jeweils Positionen des Kernels entsprechen, aus der Vielzahl von Zwischenwerten über ein erstes Zwischenwertakkumulierungshardwaremodul (123-1), das im Prozessor enthalten ist.

8. Verfahren nach Anspruch 7, wobei die Vielzahl von Kanälen den ersten Kanal und mindestens einen an den ersten Kanal angrenzenden Kanal umfasst, und
wobei die Anzahl der zwei oder mehr Multiplikationsmodule gleich der Anzahl der Vielzahl von Gewichtungen ist, die in den ersten Kernel-Informationen enthalten ist.

9. Verfahren nach Anspruch 7, wobei der Kernel ein zweidimensionaler Kernel ist,
wobei das Verfahren ferner Erhalten der Vielzahl von Ausgabewerten durch Summieren der Zwischenwerte, die jeder der Positionen des Kernels entsprechen, aus in einem Puffer gespeicherten Zwischenwerten über das erste Zwischenwertakkumulierungsmodul umfasst, und
wobei der Puffer so konfiguriert ist, dass er Zwischenwerte, die einer Zeile des Kernels entsprechen, aus der Vielzahl von Zwischenwerten speichert.

10. Verfahren nach Anspruch 9, wobei das Verfahren ferner Erhalten der Vielzahl von Ausgabewerten durch paralleles Durchführen des Faltungsvorgangs unter Verwendung von zwei oder mehr Multiplikationsmodulen gleich der Anzahl der Vielzahl von Gewichtungen, die in dem Kernel enthalten ist, umfasst.

11. Verfahren nach Anspruch 7, wobei das Verfahren ferner Folgendes umfasst:
basierend darauf, dass der Faltungsvorgang ein dreidimensionaler Faltungsvorgang ist, Steuern des Eingabeauswahlmoduls, um die Vielzahl von Eingabewerten, die in das Eingabeauswahlmodul eingegeben wird, an die Vielzahl von Multiplikationsmodulen umzuleiten; und
Eingeben eines zweiten Satzes von Gewichtungen, der jedem der Vielzahl von Multiplikationsmodulen entspricht, in die Vielzahl von Multiplikationsmodulen basierend auf den ersten Kernel-Informationen.

12. Verfahren nach Anspruch 11, wobei die elektronische Vorrichtung ferner ein zweites Zwischenwertakkumulierungsmodul umfasst, um Zwischenwerte für jeden einer Vielzahl von Kanälen zu summieren, die durch die Vielzahl von Multiplikationsmodulen erhalten werden.

13. Nicht transitorisches computerlesbares Aufzeichnungsmedium, das ein Programm umfasst, das bei Ausführung durch eine elektronische Vorrichtung nach Anspruch 1 die elektronische Vorrichtung dazu veranlasst, ein Steuerverfahren davon auszuführen, wobei das Steuerverfahren Folgendes umfasst:
basierend darauf, dass der Faltungsvorgang ein Tiefenfaltungsvorgang ist, Steuern eines Eingabeauswahlhardwaremoduls (121), das im Prozessor enthalten ist, sodass es eine Vielzahl von Eingabewerten, die einem ersten Kanal aus der Vielzahl von Kanälen entspricht, in alle zwei oder mehr Multiplikationsmodule, die allen Kanälen entsprechen, aus der Vielzahl von Multiplikationsmodulen eingibt, wobei jeder der Vielzahl von Eingabewerten, die dem ersten Kanal entspricht, für jeden voreingestellten Zyklus einer Vielzahl von Zyklen in das Eingabeauswahlmodul eingegeben wird, und wobei das Eingabeauswahlmodul jeden der Vielzahl von Eingabewerten, die in jedem voreingestellten Zyklus der Vielzahl von Zyklen eingegeben werden, an alle zwei oder mehr Multiplikationsmodule überträgt;
wobei das Verfahren ferner Folgendes umfasst:
Eingeben eines ersten Satzes von Gewichtungen, der dem ersten Kanal entspricht, nacheinander in alle zwei oder mehr Multiplikationsmodule, die allen Kanälen entsprechen, basierend auf den zweiten Kernel-Informationen,
Erhalten einer Vielzahl von Zwischenwerten basierend auf jedem der Multiplikationsvorgangsergebnisse durch paralleles Durchführen eines Multiplikationsvorgangs mit jeder der Vielzahl von Gewichtungen für jeden der Vielzahl von Eingabewerten über alle zwei oder mehr Multiplikationsmodule, und
Erhalten einer Vielzahl von Ausgabewerten basierend auf jedem eines summierten Ergebnisses durch Summieren von Zwischenwerten, die jeweils Positionen des Kernels entsprechen, aus der Vielzahl von Zwischenwerten über ein erstes Zwischenwertakkumulierungshardwaremodul (123-1), das im Prozessor enthalten ist.

## Revendications

1. Dispositif électronique (100) comprenant :
une mémoire (110) configurée pour stocker des données d'entrée tridimensionnelles comprenant (i) une pluralité de valeurs d'entrée réparties en se basant sur une pluralité de canaux, (ii) des premières informations de noyau concernant un noyau, les premières informations de noyau comprenant une pluralité de poids pour chacun de la pluralité de canaux , et (iii) des deuxièmes informations de noyau générées en convertissant la pluralité de poids, qui sont configurés sous la forme d'une matrice bidimensionnelle (horizontale * verticale) pour chacun de la pluralité de canaux, en une forme de matrice tridimensionnelle multicanal, de sorte que la pluralité de poids pour chacun de la pluralité de canaux des premières informations de noyau soit disposée dans la direction de profondeur de la pluralité de canaux ; et
un processeur (120) comprenant une pluralité de modules matériels de multiplication (122) correspondant à la pluralité de canaux, dans lequel le nombre de la pluralité de modules de multiplication est identique au nombre de la pluralité de poids de la pluralité de canaux, et dans lequel le processeur est configuré pour effectuer soit une opération de convolution 3D, soit une opération de convolution en profondeur, soit les deux, en se basant sur la pluralité de valeurs d'entrée et sur la pluralité de poids par l'intermédiaire de la pluralité de modules de multiplication,
dans lequel le processeur est en outre configuré pour :
en se basant sur l'opération de convolution étant une opération de convolution en profondeur, commander un module matériel de sélection d'entrée (121) inclus dans le processeur afin d'introduire une pluralité de valeurs d'entrée correspondant à un premier canal parmi la pluralité de canaux vers tous les deux modules de multiplication ou plus correspondant à tous le canaux parmi la pluralité de modules de multiplication,
dans lequel le processeur est en outre configuré pour :
entrer, un par un, un premier ensemble de poids correspondant au premier canal dans chacun des deux modules de multiplication ou plus correspondant à l'ensemble des canaux, en se basant sur les deuxièmes informations de noyau,
obtenir une pluralité de valeurs intermédiaires en se basant sur chacun des résultats d'opération de multiplication, en effectuant une opération de multiplication avec chacun de la pluralité de poids pour chacune de la pluralité de valeurs d'entrée, à travers tous les deux modules de multiplication ou plus, en parallèle, et
obtenir une pluralité de valeurs de sortie sur la base, pour chacune, d'un résultat obtenu en additionnant des valeurs intermédiaires correspondant respectivement aux emplacements du noyau parmi la pluralité de valeurs intermédiaires, par l'intermédiaire d'un premier module matériel d'accumulation de valeurs intermédiaires (123-1) inclus dans le processeur,
dans lequel chacune de la pluralité de valeurs d'entrée correspondant au premier canal constitue une entrée vers le module de sélection d'entrée pour chaque cycle prédéfini parmi une pluralité de cycles, et
dans lequel le module de sélection d'entrée est configuré pour transmettre chacune de la pluralité de valeurs d'entrée aux deux modules de multiplication ou plus pour chaque cycle prédéfini parmi la pluralité de cycles.

2. Dispositif électronique selon la revendication 1, dans lequel la pluralité de canaux comprend le premier canal et au moins un canal adjacent au premier canal, et
dans lequel un nombre des deux modules de multiplication ou plus est égal à un nombre de poids compris dans les premières informations de noyau.

3. Dispositif électronique selon la revendication 1, dans lequel le noyau est un noyau bidimensionnel, et
dans lequel le processeur comprend en outre un tampon (123-3) stockant des valeurs intermédiaires correspondant à une ligne du noyau parmi la pluralité de valeurs intermédiaires, et
dans lequel le processeur obtient la pluralité de valeurs de sortie en additionnant les valeurs intermédiaires correspondant à chacun d'emplacements du noyau parmi les valeurs intermédiaires stockées dans la mémoire tampon par l'intermédiaire du premier module d'accumulation de valeurs intermédiaires.

4. Dispositif électronique selon la revendication 3, dans lequel le processeur est en outre configuré pour obtenir la pluralité de valeurs de sortie en effectuant l'opération de convolution à l'aide des deux modules de multiplication ou plus étant égal au nombre de la pluralité de poids inclus dans le noyau en parallèle.

5. Dispositif électronique selon la revendication 1, dans lequel le processeur est en outre configuré pour : sur la base du fait que l'opération de convolution est une opération de convolution tridimensionnelle, commander le module de sélection d'entrée afin de contourner les valeurs d'entrée qui sont entrées dans le module de sélection d'entrée vers la pluralité de modules de multiplication, et
entrer un deuxième ensemble de poids correspondant à chacun de la pluralité de modules de multiplication dans la pluralité de modules de multiplication, sur la base des premières informations de noyau.

6. Dispositif électronique selon la revendication 5, dans lequel le processeur comprend en outre un deuxième module d'accumulation de valeurs intermédiaires (123-2) destiné à additionner des valeurs intermédiaires pour chacun de la pluralité de canaux, obtenus par l'intermédiaire de la pluralité de modules de multiplication.

7. Procédé de commande d'un dispositif électronique selon la revendication 1, le procédé comprenant :
en se basant sur le fait que l'opération de convolution est une opération de convolution en profondeur, commander un module matériel de sélection d'entrée (121) inclus dans le processeur afin d'entrer une pluralité de valeurs d'entrée correspondant à un premier canal parmi la pluralité de canaux vers tous les deux modules de multiplication ou plus correspondant à tous les canaux parmi la pluralité de modules de multiplication, dans lequel chacune de la pluralité de valeurs d'entrée correspondant au premier canal est entrée dans le module de sélection d'entrée à chaque cycle prédéfini parmi une pluralité de cycles, et dans lequel le module de sélection d'entrée transmet chacune de la pluralité de valeurs d'entrée entrées à chaque cycle prédéfini parmi la pluralité de cycles à tous les deux modules de multiplication ou plus ;
dans lequel le procédé comprend en outre :
entrer, un par un, un premier ensemble de poids correspondant au premier canal dans chacun des deux modules de multiplication ou plus correspondant à l'ensemble des canaux, en se basant sur les deuxièmes informations de noyau,
obtenir une pluralité de valeurs intermédiaires en se basant sur chacun des résultats d'opération de multiplication, en effectuant une opération de multiplication avec chacun de la pluralité de poids pour chacune de la pluralité de valeurs d'entrée, à travers tous les deux modules de multiplication ou plus, en parallèle, et
obtenir une pluralité de valeurs de sortie sur la base, pour chacune, d'un résultat obtenu en additionnant des valeurs intermédiaires correspondant respectivement aux emplacements du noyau parmi la pluralité de valeurs intermédiaires, par l'intermédiaire d'un premier module matériel d'accumulation de valeurs intermédiaires (123-1) inclus dans le processeur.

8. Procédé selon la revendication 7, dans lequel la pluralité de canaux comprend le premier canal et au moins un canal adjacent au premier canal, et
dans lequel un nombre des deux modules de multiplication ou plus est égal à un nombre de poids compris dans les premières informations de noyau.

9. Procédé selon la revendication 7, dans lequel le noyau est un noyau bidimensionnel,
dans lequel le procédé comprend en outre l'obtention de la pluralité de valeurs de sortie en additionnant des valeurs intermédiaires correspondant à chacun d'emplacements du noyau parmi les valeurs intermédiaires stockées dans un tampon par l'intermédiaire du premier module d'accumulation de valeurs intermédiaires, et
dans lequel la mémoire tampon est configurée pour stocker des valeurs intermédiaires correspondant à une ligne du noyau parmi la pluralité de valeurs intermédiaires.

10. Procédé selon la revendication 9, dans lequel le procédé comprend en outre l'obtention de la pluralité de valeurs de sortie en effectuant l'opération de convolution à l'aide de deux modules de multiplication ou plus étant égal à au nombre de la pluralité de poids inclus dans le noyau en parallèle.

11. Procédé de la revendication 7, dans lequel le procédé comprend en outre :
en se basant sur le fait que l'opération de convolution est une opération de convolution tridimensionnelle, commander le module de sélection d'entrée afin de contourner la pluralité de valeurs d'entrée entrées dans le module de sélection d'entrée vers la pluralité de modules de multiplication ; et
entrer un deuxième ensemble de poids correspondant à chacun de la pluralité de modules de multiplication dans la pluralité de modules de multiplication, sur la base des premières informations de noyau.

12. Procédé selon la revendication **11,** dans lequel le dispositif électronique comprend en outre un second module d'accumulation de valeurs intermédiaires destiné à additionner les valeurs intermédiaires pour chacun d'une pluralité de canaux, obtenus par l'intermédiaire de la pluralité de modules de multiplication.

13. Support d'enregistrement non transitoire lisible par ordinateur, comprenant un programme qui, lorsqu'il est exécuté par un dispositif électronique selon la revendication 1, amène le dispositif électronique à exécuter un procédé de commande de celui-ci, le procédé de commande comprenant :
en se basant sur le fait que l'opération de convolution est une opération de convolution en profondeur, commander un module matériel de sélection d'entrée (121) inclus dans le processeur afin d'entrer une pluralité de valeurs d'entrée correspondant à un premier canal parmi la pluralité de canaux vers tous les deux modules de multiplication ou plus correspondant à tous les canaux parmi la pluralité de modules de multiplication, dans lequel chacune de la pluralité de valeurs d'entrée correspondant au premier canal est entrée dans le module de sélection d'entrée à chaque cycle prédéfini parmi une pluralité de cycles, et dans lequel le module de sélection d'entrée transmet chacune de la pluralité de valeurs d'entrée entrées à chaque cycle prédéfini parmi la pluralité de cycles à tous les deux modules de multiplication ou plus ;
dans lequel le procédé comprend en outre :
entrer, un par un, un premier ensemble de poids correspondant au premier canal dans chacun des deux modules de multiplication ou plus correspondant à l'ensemble des canaux, en se basant sur les deuxièmes informations de noyau,
obtenir une pluralité de valeurs intermédiaires en se basant sur chacun des résultats d'opération de multiplication, en effectuant une opération de multiplication avec chacun de la pluralité de poids pour chacune de la pluralité de valeurs d'entrée, à travers tous les deux modules de multiplication ou plus, en parallèle, et
obtenir une pluralité de valeurs de sortie sur la base, pour chacune, d'un résultat obtenu en additionnant des valeurs intermédiaires correspondant respectivement aux emplacements du noyau parmi la pluralité de valeurs intermédiaires, par l'intermédiaire d'un premier module matériel d'accumulation de valeurs intermédiaires (123-1) inclus dans le processeur.
